(19) Europäisches Patentamt
European Patent Office
Office européen des brevets

(11) **EP 2 794 821 B1**

(12) **FASCICULE DE BREVET EUROPEEN**

(45) Date de publication et mention
de la délivrance du brevet:
**23.03.2016 Bulletin 2016/12**

(51) Int Cl.:
***C10L 9/08*** *(2006.01)*          ***C10B 53/02*** *(2006.01)*
***G05B 13/04*** *(2006.01)*

(21) Numéro de dépôt: **12808390.4**

(22) Date de dépôt: **20.12.2012**

(86) Numéro de dépôt international:
**PCT/EP2012/076484**

(87) Numéro de publication internationale:
**WO 2013/092912 (27.06.2013 Gazette 2013/26)**

(54) **PROCÉDÉ ET DISPOSITIF DE TORRÉFACTION RAPIDE DE BIOMASSE**

VERFAHREN UND VORRICHTUNG ZUM SCHNELLEN RÖSTEN VON BIOMASSE

PROCESS AND DEVICE FOR RAPID TORREFACTION OF BIOMASS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2011 FR 1162215**

(43) Date de publication de la demande:
**29.10.2014 Bulletin 2014/44**

(73) Titulaires:
- **Commissariat à l'Énergie Atomique et aux Énergies Alternatives**
  **75015 Paris (FR)**
- **Centre de Cooperation Internationale en Recherche**
  **Agronomique pour le Developpement**
  **75116 Paris (FR)**

(72) Inventeurs:
- **NOCQUET, Timothee**
  **38000 Grenoble (FR)**
- **COMMANDRE, Jean-Michel**
  **34790 Grabels (FR)**
- **DUPONT, Capucine**
  **38000 Grenoble (FR)**

(74) Mandataire: **Brevalex**
**95, rue d'Amsterdam**
**75378 Paris Cedex 8 (FR)**

(56) Documents cités:
**US-A1- 2007 266 623**

- **KLEINSCHMIDT C P: "Overview of international developments in torrefaction", CENTRAL EUROPEAN BIOMASS CONFERENCE, GRAZ (AUSTRIA), 26-29 JANUARY 2011, , 28 janvier 2011 (2011-01-28), pages 1-9, XP009159020, Extrait de l'Internet: URL:http://www.ieabcc.nl/workshops/task32_ 2011_graz_torrefaction/Graz%20K leinschmidt%202011.pdf [extrait le 2012-05-03]**
- **BERGMAN P C A ET AL: "Torrefaction for biomass upgrading", BIOMASS FOR ENERGY, INDUSTRY AND CLIMATE PROTECTION : 14TH EUROPEAN BIOMASS CONFERENCE & EXHIBITION ; PROCEEDINGS OF THE INTERNATIONAL CONFERENCE, 17 - 21 OCTOBER 2005 PARIS,, 21 octobre 2005 (2005-10-21), pages 206-209, XP008101852, ISBN: 978-88-89407-07-3 [extrait le 2005-10-21]**

**Description**

**DOMAINE TECHNIQUE**

La présente invention se rapporte au domaine de la valorisation de la biomasse par voie thermochimique.
Elle concerne un procédé de traitement thermique de particules de biomasse, du type connu sous le nom de torréfaction. Un tel traitement permet de préparer une charge de biomasse en vue de faciliter son fractionnement par broyage pour le préparer à:

- la gazéification dans un réacteur à flux entraîné ;
- la co-combustion avec du charbon.

Par « particules », il faut comprendre tout type de morceaux, grains, copeaux, fragments ou débris de biomasse de nature solide.
Le terme biomasse désigne tout type de matériau d'origine végétale, animale ou fongique, pouvant devenir source d'énergie par combustion.
L'invention porte notamment, mais non exclusivement, sur la torréfaction de biomasse lignocellulosique, telle que du bois.
Elle concerne en particulier un procédé de commande d'une unité de torréfaction de particules de biomasse dans laquelle les particules sont torréfiées pendant une durée de torréfaction $t_r$ dans un fluide, de préférence un gaz, porté à une température de torréfaction $T_g$.
Cette invention concerne également un procédé de torréfaction utilisant ce procédé de commande, un dispositif de commande permettant de mettre en oeuvre ledit procédé de commande, ainsi qu'une unité de torréfaction comprenant ce dispositif.

**ÉTAT DE LA TECHNIQUE ANTÉRIEURE**

Dans un procédé classique de gazéification, la biomasse est prétraitée (séchée et broyée grossièrement, à une dimension de l'ordre du centimètre), puis convertie dans un gazéifieur en gaz de synthèse, principalement en $H_2$ et CO. Celui-ci peut ensuite être transformé par réaction catalytique en carburant liquide du type Diesel Fischer Tropsch, méthanol/DME ou alcools, dihydrogène, ou en carburant gazeux du type connu sous le nom anglais *Synthetic Natural Gas.*
Un réacteur de gazéification particulièrement intéressant est le réacteur à flux entraîné. Fonctionnant à haute température, typiquement entre 1000 et 1600°C, avec des temps de séjour de quelques secondes, il permet d'obtenir un gaz pratiquement exempt de goudrons dans le gaz de synthèse. Dans ces conditions, les transferts thermiques et de matière sont intenses, et la conversion complète de la biomasse implique de l'injecter sous forme de particules de dimension inférieure à 1 mm, et de préférence de l'ordre de 100 μm à 500 μm.
Or, il est difficile et donc cher de réduire la taille des particules de biomasse au-dessous du centimètre, en particulier dans le cas de biomasse lignocellulosique, du fait de la nature fibreuse de cette biomasse. Cette nature fibreuse se traduit notamment par la présence de micro-fibrilles de nature à favoriser l'agglomération, non souhaitable, des particules broyées.
Une solution consiste à pré-broyer la biomasse de façon à obtenir des particules dont la dimension caractéristique est de l'ordre du centimètre, à torréfier ces particules, puis à les broyer jusqu'à obtenir des particules de forme sensiblement sphérique et lisse dont la dimension caractéristique est de l'ordre de 100 μm à 500 μm, pour enfin les injecter dans le réacteur à flux entraîné.
Dans la seconde application proposée, la biomasse peut être valorisée dans les centrales thermiques par co-combustion avec du charbon. Les difficultés techniques actuelles sont semblables à celles rencontrées avec le réacteur à flux entraîné, puisque la biomasse doit être injectée avec le charbon sous forme pulvérisée. La torréfaction de la charge de biomasse permet son injection dans le réacteur ainsi que l'harmonisation de ses propriétés avec celles du charbon, ce qui permet d'utiliser les centrales thermiques dimensionnées pour du charbon. La torréfaction constitue ainsi une solution de prétraitement de la biomasse pour ce procédé.
La torréfaction est habituellement considérée par la communauté scientifique comme étant un traitement thermique doux de la biomasse, entre 200°C et 300°C environ, sous atmosphère en absence ou défaut d'oxygène, et qui dure classiquement de quelques dizaines de minutes à plusieurs heures. Lors de cette transformation thermique, les particules de biomasse perdent de la masse à volume quasi constant à mesure de l'avancée de la réaction. Cela rend les particules mécaniquement plus fragiles, et augmente ainsi leur broyabilité. Cela altère aussi la nature fibreuse de la biomasse, et rend les particules torréfiées plus lisses et plus sphériques, ce qui facilite leur injection dans le réacteur de gazéification.

Par ailleurs, lors de la torréfaction, des gaz sont émis. Parmi ces gaz, on trouve des espèces incondensables, c'est-à-dire gazeuses à température ambiante, et des espèces condensables qui sont relâchées sous forme gazeuse lors du traitement thermique et qui condensent ensuite à température ambiante : ce sont principalement de la vapeur d'eau, du dioxyde de carbone, et de l'acide acétique. Cela engendre une diminution des rapports O/C et H/C du solide, et une augmentation de sa densité énergétique.

La torréfaction permet d'obtenir un matériau plus facilement transportable et stockable : la biomasse torréfiée est plus dense énergétiquement que la biomasse brute, plus hydrophobe, et résiste mieux aux dégradations biologiques.

Toutefois, la durée requise des traitements par torréfaction conventionnels induit des coûts industriels qu'il est souhaitable de pouvoir réduire.

Cette durée décroît lorsque l'on accroît la température de torréfaction $T_g$, c'est-à-dire la température du fluide dans lequel baignent les particules de biomasse au sein d'un réacteur de torréfaction.

Cependant, une telle augmentation de la température de torréfaction $T_g$ conduit habituellement à une réduction de l'homogénéité des dimensions des particules obtenues après torréfaction puis broyage. Autrement dit, une telle augmentation de la température de torréfaction $T_g$ induit en général un étalement de la distribution de taille des particules torréfiées et broyées. De ce fait, l'obtention de particules de dimensions suffisamment petites pour des applications d'un des types précités, requiert un broyage plus poussé et se révèle donc plus coûteuse.

## EXPOSÉ DE L'INVENTION

L'invention a notamment pour but d'apporter une solution simple, économique et efficace à ce problème, et a en particulier pour objet un procédé de torréfaction de particules de biomasse sous une température optimisée pour réduire au mieux la durée du procédé tout en conservant une broyabilité satisfaisante des particules de biomasse torréfiée.

L'invention propose à cet effet un procédé de commande d'une unité de torréfaction pour la torréfaction de particules de biomasse pendant une durée de torréfaction $t_r$ dans un gaz porté à une température de torréfaction $T_g$, ledit procédé étant caractérisé en ce qu'il comprend les étapes successives de :

- mesure d'un diamètre moyen *dp* des particules de biomasse ;
- en fonction du diamètre moyen *dp* des particules de biomasse, calcul d'une température de torréfaction maximale $T_g^{max}$ pour laquelle un rapport *H* d'un temps caractéristique de la réaction de torréfaction à un temps caractéristique du transfert thermique au niveau des particules de biomasse est égal à une valeur minimale $H^{min}$ prédéfinie ;
- réglage de la température de torréfaction $T_g$ dudit fluide à une valeur inférieure ou égale à ladite température de torréfaction maximale $T_g^{max}$ ;
- réglage de la durée de torréfaction $t_r$ à une valeur telle que le rendement massique final *R* de la torréfaction soit égal à une valeur cible prédéfinie.

On entend par « temps caractéristique » un temps nécessaire pour que le paramètre considéré atteigne un certain pourcentage de sa valeur maximale. Ce pourcentage est couramment choisi égal à 63,2%.

On entend par « rendement massique final » le rapport de la masse des particules après torréfaction à la masse des particules avant torréfaction, ces particules ayant été séchées jusqu'à masse constante (masse sèche), par exemple conformément à la norme XP CEN/TS 14774-1. Ce rendement diminue donc au cours de l'avancement de la réaction de torréfaction.

Il a été constaté qu'un accroissement de l'homogénéité de la réaction de torréfaction au sein de chaque particule de biomasse permet de réduire la dispersion de la distribution des tailles respectives des particules torréfiées puis broyées.

Le procédé de commande selon l'invention permet de déterminer la température de torréfaction la plus élevée qui soit compatible avec un niveau minimal d'homogénéité de la réaction de torréfaction au sein des particules. Cette homogénéité est en effet d'autant meilleure que le transfert thermique au sein des particules de biomasse est rapide par comparaison à la réaction de torréfaction. L'homogénéité de cette réaction peut donc être estimée à partir de la valeur du rapport H précité.

Une fois cette température déterminée, on détermine la durée de torréfaction permettant d'aboutir à un rendement massique final prédéterminé.

Le procédé selon l'invention permet donc de maximiser la température de la torréfaction et donc de réduire au mieux la durée de ce traitement thermique, tout en garantissant une bonne efficacité de ce traitement. Cette réduction de durée peut se traduire par une réduction considérable du coût de ce traitement.

Il est à noter que le procédé selon l'invention comprend en outre avantageusement les étapes ultérieures successives de :

- démarrage de la torréfaction à la température de torréfaction $T_g$ réglée précédemment;
- arrêt de la torréfaction au bout d'un temps égal à la durée de torréfaction $t_r$ réglée précédemment.

De plus, la température de torréfaction $T_g$ est avantageusement réglée égale à ladite température de torréfaction maximale $T_g^{max}$.

Cela permet d'optimiser la vitesse de la réaction de torréfaction, et donc de maximiser le gain de temps et la réduction de coûts permis par l'invention.

La valeur minimale $H^{min}$ prédéfinie dudit rapport $H$ est avantageusement supérieure ou égale à 2, de préférence supérieure ou égale à 5, et encore préférentiellement supérieure ou égale à 10.

Comme expliqué ci-dessus, le choix de la valeur minimale de ce rapport $H$ détermine le degré d'homogénéité de la réaction de torréfaction, et donc le niveau de broyabilité des particules torréfiées.

La valeur cible du rendement massique final $R$ de la torréfaction est de préférence supérieure ou égale à 60%, préférentiellement 70%, et encore plus préférentiellement 80%.

Ces valeurs de rendement massique final permet de garantir la viabilité de la torréfaction en termes de bilan énergétique.

La température de torréfaction $T_g$ est comprise dans la plage 300°C-400°C, préférentiellement dans la plage 300°C - 350°C, et plus préférentiellement dans la plage 325°C - 350°C.

De telles températures permettent en général d'aboutir à une torréfaction relativement rapide tout en conservant un niveau satisfaisant de broyabilité des particules torréfiées.

La durée de torréfaction $t_r$ est inférieure à 15 minutes, de préférence inférieure à 10 minutes, encore plus préférentiellement inférieure à 5 minutes.

Ces durées permettent d'atteindre les niveaux de rendement indiqués ci-dessus pour des températures de torréfaction comprises dans les fourchettes précitées.

Dans un mode de réalisation préféré de l'invention, la température de torréfaction maximale $T_g^{max}$ est déterminée en fonction de la valeur minimale $H^{min}$ dudit rapport par la formule :

$$H^{min} = \frac{1/k_t}{\dfrac{\rho_p Cp_p d_p^2}{36\lambda_{eff,p}}}$$

dans laquelle :

- $k_t$ est une constante de la réaction de torréfaction, considérée comme étant une réaction du premier ordre ;
- $\rho_p$ est la masse volumique de la biomasse ;
- $Cp_p$ est la chaleur massique de la biomasse ;
- $\lambda_{eff,p}$ est la conductivité thermique effective de la biomasse.

La formule ci-dessus traduit le rapport du temps caractéristique de la réaction de torréfaction au temps caractéristique du transfert thermique interne par conduction et radiation au sein des particules de biomasse.

Dans un deuxième mode de réalisation préféré de l'invention, la température de torréfaction maximale $T_g^{max}$ est déterminée en fonction de ladite valeur minimale $H^{min}$ dudit rapport par la formule :

$$H^{min} = \frac{1/k_t}{\dfrac{\rho_p Cp_p d_p^2}{36\lambda_{eff,p}} + min\left(\dfrac{\rho_p Cp_p d_p}{6h_{conv}}; \dfrac{\rho_p Cp_p d_p}{6\omega_p\sigma\left(T_g^{max} + T_p\right)\left(T_g^{max^2} + T_p^2\right)}\right)}$$

dans laquelle :

- $k_t$ est une constante de la réaction de torréfaction, considérée comme étant une réaction du premier ordre ;
- $\rho_p$ est la masse volumique de la biomasse ;

- $Cp_p$ est la chaleur massique de la biomasse ;
- $\lambda_{eff,p}$ est la conductivité thermique effective de la biomasse ;
- $\omega_p$ est l'émissivité de la biomasse ;
- $h_{conv}$ est le coefficient de transfert thermique externe entre la biomasse et ledit fluide ;
- $\sigma$ est la constante de Stefan-Boltzmann ;
- $Tp$ est la température initiale des particules de biomasse avant torréfaction.

La formule ci-dessus traduit le rapport du temps caractéristique de la réaction de torréfaction à la somme du temps caractéristique du transfert thermique interne par conduction et radiation au sein des particules de biomasse et du minimum des temps caractéristiques respectifs des transferts thermiques externes, c'est-à-dire avec le fluide, par convection et par radiation.

Cette formule permet donc une meilleure estimation que la formule utilisée dans le premier mode de réalisation de l'invention.

Dans ce deuxième mode de réalisation de l'invention, le coefficient de transfert thermique externe $h_{conv}$ est de préférence déterminé à partir de la corrélation de Ranz-Marschall, par la formule :

$$h_{conv} = \frac{\lambda_g}{d_p}(2 + 0.6 Re_p^{1/2} . Pr^{1/2})$$

dans laquelle :

- $Re_p$ est le nombre de Reynolds déterminé par la formule : $Re_p = \frac{\rho_g \times V_g \times d_p}{\mu_g}$ ;

- $Pr$ est le nombre de Prandtl déterminé par la formule : $Pr = \frac{\mu_g \times Cp_g}{\lambda_g}$ ;

où :

- $\rho_p$ est la masse volumique du fluide ;
- $\mu_g$ est la viscosité du fluide ;
- $\lambda_g$ est la conductivité thermique du fluide ;
- $Cp_g$ est la chaleur massique du fluide ;
- $V_g$ est une vitesse moyenne du fluide.

Par ailleurs, la constante de réaction $k_t$ est déterminée à partir d'un modèle cinétique de la réaction de torréfaction, et dépend du type de biomasse torréfiée.

D'une manière générale, la durée de torréfaction $t_r$ est avantageusement déterminée en fonction de la température de torréfaction $T_g$ et de la valeur de cible du rendement massique final $R$ de la torréfaction, au moyen de données expérimentales de corrélation préétablies.

La durée de torréfaction peut en particulier être déterminée à partir d'une extrapolation des données expérimentales précitées.

L'invention concerne aussi un procédé de torréfaction de particules de biomasse, de préférence lignocellulosique, pendant une durée de torréfaction $t_r$ dans un gaz porté à une température de torréfaction $T_g$ au sein d'une unité de torréfaction, comprenant la commande de l'unité de torréfaction au moyen d'un procédé de commande du type décrit ci-dessus.

Ce procédé est avantageusement appliqué à des particules de biomasse dont le diamètre moyen $dp$ est inférieur à 40 mm, de préférence inférieur à 20 mm, encore plus préférentiellement inférieur à 10 mm.

Dans une application particulièrement avantageuse de ce procédé, la biomasse est constituée de bois. Le procédé selon l'invention permet donc d'éviter l'utilisation d'additifs tels que de l'huile.

Par ailleurs, ledit gaz est de préférence un gaz inerte, tel que du diazote N2.

L'invention concerne également un dispositif de commande d'unité de torréfaction pour la torréfaction de particules de biomasse pendant une durée de torréfaction $t_r$ dans un fluide porté à une température de torréfaction $T_g$, le dispositif de commande étant caractérisé en ce qu'il comprend :

- des moyens de mesure d'un diamètre moyen $dp$ de particules de biomasse ;

- des premiers moyens de calcul configurés pour déterminer, en fonction du diamètre moyen $dp$ mesuré des particules de biomasse, une température de torréfaction maximale $T_g^{max}$ pour laquelle le rapport $H$ d'un temps caractéristique de la réaction de torréfaction à un temps caractéristique du transfert thermique au sein des particules de biomasse est égal à une valeur minimale $H^{min}$ prédéfinie ;

- des premiers moyens de commande configurés pour régler ladite température de torréfaction $T_g$ à une valeur inférieure ou égale à ladite température de torréfaction maximale $T_g^{max}$ ;

- des seconds moyens de calcul et de commande configurés pour régler ladite durée de torréfaction $t_r$ à une valeur telle que le rendement massique final $R$ de la torréfaction soit égal à une valeur prédéfinie.

Les moyens de calcul précités permettent une mise en oeuvre du procédé selon l'invention d'une manière fiable et rapide.

Le dispositif de commande précité comprend de préférence des moyens de préréglage de la valeur minimale $H^{min}$ dudit rapport $H$ et/ou des moyens de préréglage du rendement massique final $R$ de la torréfaction.

Ces valeurs peuvent ainsi être aisément modifiées avant chaque traitement de particules de biomasse par torréfaction.

L'invention concerne enfin une unité de torréfaction pour la torréfaction de particules de biomasse pendant une durée de torréfaction $t_r$ dans un gaz porté à une température de torréfaction $T_g$, comprenant un dispositif de commande du type décrit ci-dessus, ainsi que des moyens de chauffage pour porter ledit gaz à la température de torréfaction $T_g$ fixée par ledit dispositif, pendant un temps égal à la durée de torréfaction $t_r$ fixée par ce dispositif.

## BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

- la figure 1 est une vue schématique partielle en coupe longitudinale d'une unité de torréfaction selon un mode de réalisation préféré de l'invention ;
- la figure 1a est une vue à plus grande échelle du détaille de la figure 1;
- la figure 2 est un graphe illustrant la relation entre la température de torréfaction maximale $T_g^{max}$ et le diamètre $d_p$ des particules de biomasse pour trois valeurs du rapport $H$ ;
- les figures 3 et 4 sont des graphes illustrant, respectivement pour deux valeurs du diamètre $d_p$ des particules de biomasse, l'évolution du rendement massique final $R$ de la torréfaction en fonction de la durée de torréfaction $t_r$, pour trois valeurs de la température $T_g$ de torréfaction ;
- la figure 5 est une vue schématique partielle de côté d'un dispositif d'estimation expérimentale de l'homogénéité de la torréfaction au sein des particules de biomasse torréfiées ;
- la figure 6 est une vue schématique de dessus d'une particule de biomasse torréfiée, illustrant un principe de mesure mis en oeuvre au moyen du dispositif de la figure 5.

Dans l'ensemble de ces figures, des références identiques peuvent désigner des éléments identiques ou analogues.

## EXPOSÉ DÉTAILLÉ DE MODES DE RÉALISATION PRÉFÉRÉS

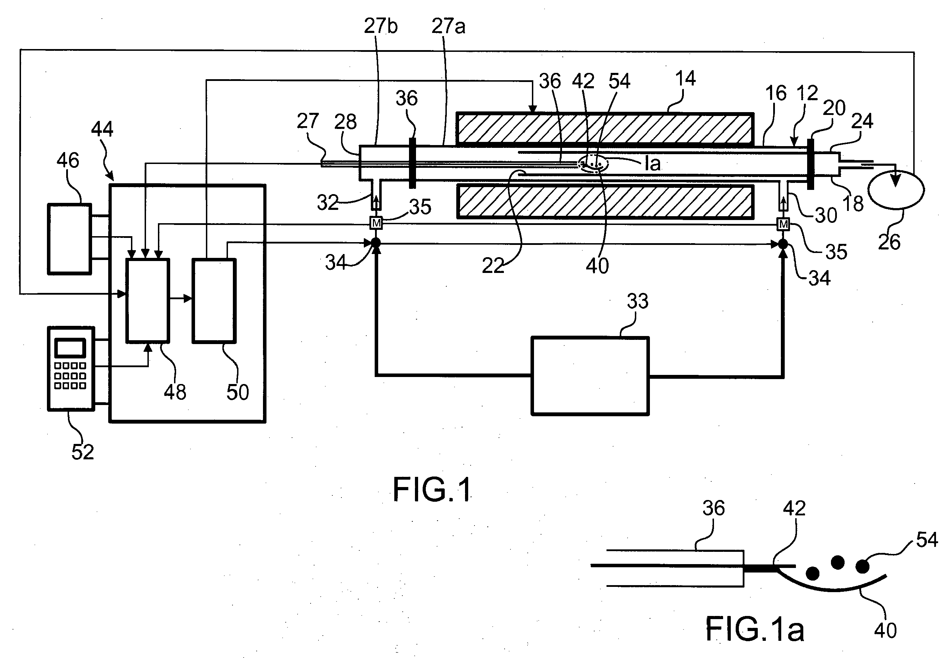

La figure 1 représente une unité de torréfaction 10 de laboratoire, destinée à la torréfaction de particules de biomasse solide, par exemple de bois, et comprenant un réacteur tubulaire 12, ainsi qu'un élément chauffant 14 formé de résistances électriques entourant le réacteur 12 et capables d'atteindre jusqu'à 1000°C environ.

Le réacteur 12 est du type double enveloppe, et comprend ainsi un tube extérieur 16 en quartz et un tube intérieur 18 également en quartz et s'étendant à l'intérieur du tube extérieur 16 depuis une première 20 des extrémités de ce dernier jusque dans une partie médiane de celui-ci, où le tube intérieur 18 présente une extrémité ouverte 22. L'extrémité opposée 24 du tube intérieur fait saillie au-delà du tube extérieur 16 et est raccordée à un dispositif d'analyse 26. La première extrémité 20 du tube extérieur 16 est fermée autour du tube intérieur 18. Le tube extérieur 16 comporte une première partie 27a comportant la première extrémité 20 du tube 16 et ouverte à son extrémité opposée, ainsi qu'une seconde partie 27b amovible comportant l'extrémité opposée 28 du tube 16. La seconde partie 27b du tube 16 est raccordable à la première partie 27a du tube au moyen d'un raccord 27 comme illustré sur la figure 1.

Le tube extérieur 16 comprend, au voisinage de chacune de ses extrémités opposées 20 et 28, un raccord 30, 32 à une source 33 de gaz inerte sous pression, tel que du diazote N2. Chaque raccord 30, 32 est connecté à des moyens 34 de contrôle et à des moyens 35 de mesure du débit de gaz pénétrant dans le réacteur 12.

La seconde extrémité 28 du tube extérieur 16 est pourvue d'un orifice de passage d'une tige 36 présentant à son extrémité disposée à l'intérieur du réacteur 12, un porte-échantillon 40 équipé d'un thermocouple 42. La tige 36 est déplaçable en translation selon la direction longitudinale, entre une position rétractée dans laquelle le porte-échantillon 40 est proche de la seconde extrémité 28 du tube extérieur 16 et se trouve à l'extérieur de l'alésage de l'élément chauffant 14, et une position déployée dans laquelle le porte-échantillon est écarté de la seconde extrémité 28 du tube extérieur 16 et se situe au sein de l'alésage de l'élément chauffant 14.

Dans l'exemple illustré, la longueur du tube extérieur 16 est d'environ 1290 mm et celle du tube intérieur 18 est d'environ 850 mm. De plus, le diamètre interne du tube extérieur 16 est d'environ 70 mm et celui du tube intérieur 18 est d'environ 55 mm. L'étendue longitudinale de l'élément chauffant 14 est d'environ 620 mm.

L'unité de torréfaction 10 comporte en outre un dispositif de commande 44, représenté très schématiquement sur la figure 1, et relié, en entrée, aux moyens de mesure de débit 35, au thermocouple 42, à des moyens de mesure de température intégrés à l'élément chauffant 14, et au dispositif d'analyse 26, et en sortie, aux moyens de contrôle de débit 34 et à l'élément chauffant 14.

Le dispositif de commande 44 comporte un dispositif 46 de mesure du diamètre moyen $dp$ des particules de biomasse. Ce dispositif de mesure peut être de tout type conventionnel, fonctionnant par exemple à partir de mesures optiques et d'algorithmes de traitement d'image, ou à partir dé capteurs mécaniques. Ce dispositif peut en variante prendre la forme d'une unité d'entrée permettant la saisie d'une valeur du diamètre préalablement mesurée par un opérateur humain.

Le dispositif de commande 44 comporte également une unité de calcul 48 configurée pour déterminer, en fonction du diamètre moyen $d_p$ et de la température initiale $T_p$ mesurés des particules de biomasse, une température de torréfaction maximale $T_g^{max}$ pour laquelle le rapport $H$ d'un temps caractéristique de la réaction de torréfaction à un temps caractéristique du transfert thermique au niveau des particules de biomasse est égal à une valeur minimale $H^{min}$ prédéfinie.

Le rapport $H$ est défini par la formule :

$$H = \frac{1/k_t}{\frac{\rho_p Cp_p d_p^2}{36\lambda_{eff,p}} + \min\left(\frac{\rho_p Cp_p d_p}{6h_{conv}} ; \frac{\rho_p Cp_p d_p}{6\omega_p \sigma\left(T_g + T_p\right)\left(T_g^2 + T_p^2\right)}\right)}$$

dans laquelle :

- $k_t$ est une constante de la réaction de torréfaction, considérée comme étant une réaction du premier ordre ;
- $\rho_p$ est la masse volumique des particules de biomasse ;
- $Cp_p$ est la chaleur massique de ces particules ;
- $\lambda_{eff,p}$ est la conductivité thermique effective de ces particules, donnée par la formule :

$$\lambda_{eff,p} = \varepsilon_p \lambda_g + (1 - \varepsilon_p)\lambda_p$$

où $\varepsilon_p$ est la porosité des particules de biomasse et $\lambda_p$ est la conductivité thermique de ces particules ;
- $\omega_p$ est l'émissivité de ces particules ;
- $h_{conv}$ est le coefficient de transfert thermique externe entre ces particules et le gaz inerte ;
- $\sigma$ est la constante de Stefan-Boltzmann égale à $5,67.10^{-8}$ W.m$^{-2}$.K$^{-4}$.

Il est à noter que le numérateur de la formule ci-dessus correspond au temps caractéristique de la réaction de torréfaction tandis que le dénominateur correspond au temps caractéristique du transfert thermique au sein des particules de biomasse. Le premier terme de ce dénominateur correspond à un temps caractéristique du transfert thermique par conduction et radiation au sein des particules de biomasse tandis que le deuxième terme correspond au minimum des temps caractéristiques respectifs des transferts thermiques externes par convection et par radiation.

L'unité de calcul 48 détermine la constante de la réaction $k_t$ à partir de données préenregistrées pour un ou plusieurs types de biomasse à torréfier, comme cela apparaîtra plus clairement dans ce qui suit.

L'unité de calcul 48 détermine le coefficient de transfert thermique externe $h_{conv}$ à partir de la corrélation de Ranz-Marschall, par la formule :

$$h_{conv} = \frac{\lambda_g}{d_p}(2 + 0.6 Re_p^{1/2} . Pr^{1/2})$$

dans laquelle :

- $Re_p$ est le nombre de Reynolds déterminé par la formule :

$$Re_p = \frac{\rho_g \times V_g \times d_p}{\mu_g} \ ;$$

- $Pr$ est le nombre de Prandtl déterminé par la formule :

$$Pr = \frac{\mu_g \times Cp_g}{\lambda_g} \ ;$$

et où :

- $\rho_g$ est la masse volumique du gaz inerte ;
- $\mu_g$ est la viscosité de ce gaz ;
- $\lambda_g$ est la conductivité thermique de ce gaz ;
- $Cp_g$ est la chaleur massique de ce gaz ;
- $V_g$ est une vitesse de ce gaz par rapport aux particules de biomasse.

La vitesse $V_g$ est déterminée par la formule :

$$V_g = \frac{D_g}{S_{18}}$$

dans laquelle $D_g$ est le débit total de gaz injecté par les raccords 30 et 32, qui peut par exemple être de l'ordre de 1 L/min, et $S_{18}$ est la section du tube intérieur 18.

Le dispositif de commande 44 comporte en outre une unité de contrôle 50 configurée pour régler la température de torréfaction $T_g$ à une valeur inférieure ou, de préférence, égale, à la température de torréfaction maximale $T_g^{max}$ déterminée par l'unité de calcul 48.

De plus, l'unité de calcul 48 précitée est configurée pour calculer une durée de torréfaction $t_r$ pour laquelle, compte tenu de la température de torréfaction $T_g$, rendement massique final $R$ de la torréfaction soit égal à une valeur prédéfinie.

A cet effet, l'unité de calcul 48 comporte une mémoire dans laquelle sont enregistrées des données expérimentales donnant le rendement massique final $R$ correspondant à différents triplets {température de torréfaction $T_g$ ; durée de torréfaction $t_r$ ; diamètre moyen $d_p$ des particules de biomasse}. L'unité de calcul est ainsi configurée pour déterminer la durée de torréfaction $t_r$ par extrapolation à partir de ces données préenregistrées.

L'unité de contrôle 50 est configurée pour interrompre le traitement par torréfaction au sein du réacteur 12 au bout de la durée de torréfaction $t_r$ déterminée par l'unité de calcul 48.

Le dispositif de commande 44 comporte en outre une unité d'entrée 52 permettant la saisie de la valeur minimale $H^{min}$ du rapport $H$ précité et du rendement massique final $R$ souhaité de la torréfaction.

De préférence, l'unité d'entrée permet en outre la saisie du type de biomasse à torréfier, auquel cas l'unité de calcul comporte une mémoire dans laquelle sont enregistrées les valeurs des paramètres relatifs à différents types de biomasse, c'est-à-dire la constante de la réaction $k_t$, la masse volumique $\rho_p$, la chaleur massique $Cpp$, la conductivité thermique effective $\lambda_{eff,p}$, et l'émissivité $\omega_p$. En variante, l'unité d'entrée peut être configurée pour permettre une saisie directe des valeurs respectives de ces paramètres ou de paramètres permettant de les déterminer.

Il en est de même pour les paramètres relatifs au gaz inerte, c'est-à-dire la masse volumique $\rho_g$ de celui-ci, sa viscosité $\mu_g$, sa conductivité thermique $\lambda_g$, et sa chaleur massique $Cp_g$.

L'unité de torréfaction 10 décrite ci-dessus est une unité destinée à être utilisée à des fins expérimentales en laboratoire, pour de petits volumes de biomasse. Toutefois, la description qui précède peut être aisément adaptée par l'homme du métier à tout type d'unité de torréfaction, notamment à visée industrielle, pour la torréfaction de grands volumes de biomasse.

L'unité de torréfaction 10 décrite ci-dessus peut être utilisée de la manière suivante pour la torréfaction d'un échantillon 54 de particules de biomasse.

Dans un premier temps, l'échantillon 54 peut éventuellement être pesé après séchage jusqu'à masse constante.

Après mise en marche du dispositif de commande 44, un opérateur saisit, au moyen du dispositif d'entrée 52, le type de biomasse à torréfier, la valeur minimale $H^{min}$ du rapport $H$ précité, ainsi que la valeur du rendement massique final $R$ souhaité de la torréfaction.

L'unité de calcul détermine alors la température de torréfaction maximale $T_g^{max}$ compatible avec ces valeurs, ainsi que la durée de torréfaction $t_r$ correspondante.

Le dispositif de commande 44 provoque ensuite la mise en marche de l'élément chauffant 14 et sa régulation en température à partir des moyens de mesure de température intégrés à cet élément chauffant.

Par ailleurs, la seconde partie 27b du tube extérieur 16 étant détachée de la première partie 27a de celui-ci, l'opérateur dispose l'échantillon 54 sur le porte-échantillon 40 qui se trouve alors à l'extérieur du réacteur 12. L'opérateur raccorde ensuite la seconde partie 27b du tube extérieur 16 sur la première partie 27a de celui-ci, et dispose le porte-échantillon 40 du côté de la seconde extrémité 28 du tube extérieur, à l'extérieur de la région entourée par l'élément chauffant 14, en maintenant la tige 36 dans sa position rétractée.

Le dispositif de commande 44 commande les moyens de contrôle de débit 34 et la source de gaz inerte 33 de manière à ce que du gaz sous pression pénètre constamment par les raccords 30 et 32 du tube extérieur 16 du réacteur 12. Un débit de gaz correspondant s'échappe ainsi vers le dispositif d'analyse 26, de manière à purger le réacteur 12.

Le gaz injecté dans le réacteur 12 par le raccord 30 proche de la première extrémité 20 du tube extérieur 16 est réchauffé entre les tubes extérieur 16 et intérieur 18 avant d'atteindre une région médiane du réacteur 12 entourée par l'élément chauffant 14. Le gaz injecté dans le réacteur 12 par l'autre raccord 32 permet de baigner l'échantillon 54 afin de le maintenir à sa température initiale avant le début de la torréfaction et empêcher ainsi que le traitement thermique de l'échantillon 54 ne s'amorce de manière non contrôlée. Il est à noter que le débit de gaz injecté par cet autre raccord 32 est de préférence égal au tiers du débit total de gaz injecté dans le réacteur 12 par les deux raccords 30 et 32. Le dispositif de commande 44 régule l'élément chauffant 14 de sorte que la température du gaz au sein du réacteur 12, déterminée par les moyens de mesure de température intégrés à l'élément chauffant 14, demeure constamment égale à une température de torréfaction $T_g$ qui peut être inférieure, ou de préférence égale, à la température de torréfaction maximale $T_g^{max}$ déterminée précédemment.

Dès que le dispositif d'analyse 26 indique au dispositif de commande 44 que le taux de dioxygène présent au sein du réacteur 12 est suffisamment bas, de sorte que ce réacteur se trouve rempli d'un milieu gazeux inerte propice à la torréfaction, et si la température du gaz a atteint la température de torréfaction $T_g$, la tige 36 est déplacée en translation jusqu'à dans sa position déployée illustrée sur la figure 1, soit manuellement par un opérateur humain, soit automatiquement au moyen d'un dispositif robotisé prévu à cet effet (non représenté sur la figure 1).

La régulation en température de l'élément chauffant 14 peut dès lors être basée sur une mesure de température réalisée par le thermocouple 42 disposé au plus près de l'échantillon 40 pour un maximum de précision. La mesure de température peut bien entendu être réalisée par tout autre moyen dans le cadre de la présente invention.

Au bout d'une durée égale à la durée de torréfaction $t_r$ déterminée précédemment, la tige 36 est déplacée vers sa position rétractée, soit manuellement par l'opérateur humain, soit automatiquement au moyen du dispositif robotisé précité.

Une application particulière du procédé de torréfaction décrit ci-dessus à la torréfaction de particules de Hêtre va maintenant être décrite.

Pour ce matériau, les valeurs des paramètres nécessaires au calcul du rapport $H$ sont par exemple :

- $\rho_p$ = 710 $Kg$.m$^{-3}$ ;
- $Cpp$ = 1522 $J.Kg^{-1}K^{-1}$;
- $\lambda p$ = 0,112 $W.m^{-1}K^{-1}$ ;
- $\varepsilon_p$ = 0,7 ;
- $\omega_p$ = 0,9

De plus, la constante de réaction $k_t$ est déterminée conformément aux travaux de Di Blasi et Branca présentés dans l'article Di Blasi, C. and C. Branca (2001) : "Kinetics of Primary Product Formation from Wood Pyrolysis.", Industrial & Engineering Chemistry Research 40(23): 5547-5556.

Cette constante de réaction $k_t$ est donc estimée par la formule :

$$k_t = 4{,}38.\,10^9 e^{-141200/R.T_g}.$$

Le gaz utilisé étant du diazote N2, les valeurs des paramètres correspondants sont bien connues de l'homme du métier. Il est rappelé que la conductivité thermique de ce gaz s'obtient par la formule :

$$\lambda_g = \frac{\mu_g}{M_g}\left[1{,}3\big(Cp_g M_g - R\big) + 14644 - \frac{2928{,}8}{T_g/Tc_g}\right]$$

dans laquelle :

- $M_g$ est la masse molaire du gaz égale à 0,028 kg/mol ;
- R est la constante des gaz parfaits égale à 8,3145 J/(mol.K) ;
- $Tc_g$ est la température critique du gaz (-146°C) ;
- $Cp_g$ est la chaleur massique du gaz qui s'obtient par la formule :

$$Cp_g = \frac{6{,}5 + 0{,}001 T_g}{M_g} * 4{,}18$$

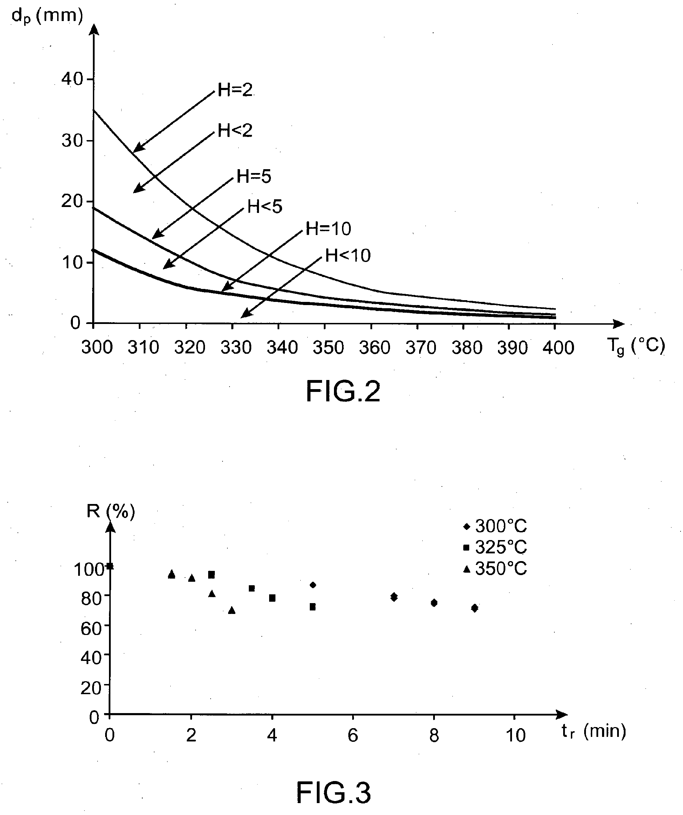

La figure 2 représente trois courbes illustrant la relation entre la température de torréfaction $T_g$ et le diamètre moyen *dp* des particules de biomasse pour que le rapport *H* calculé par la formule ci-dessus soit égal respectivement à 2, 5 et 10, dans le cas de particules de Hêtre torréfiées sous diazote N2, ces particules étant initialement à une température $T_p = 25°C$.

Ce type de graphe illustre le principe mis en oeuvre dans le dispositif de commande 44 décrit ci-dessus consistant à déterminer la température de torréfaction maximale $T_g^{max}$ garantissant un niveau minimal d'homogénéité $H^{min}$ prédéfini, en fonction du diamètre moyen *dp* des particules de biomasse.

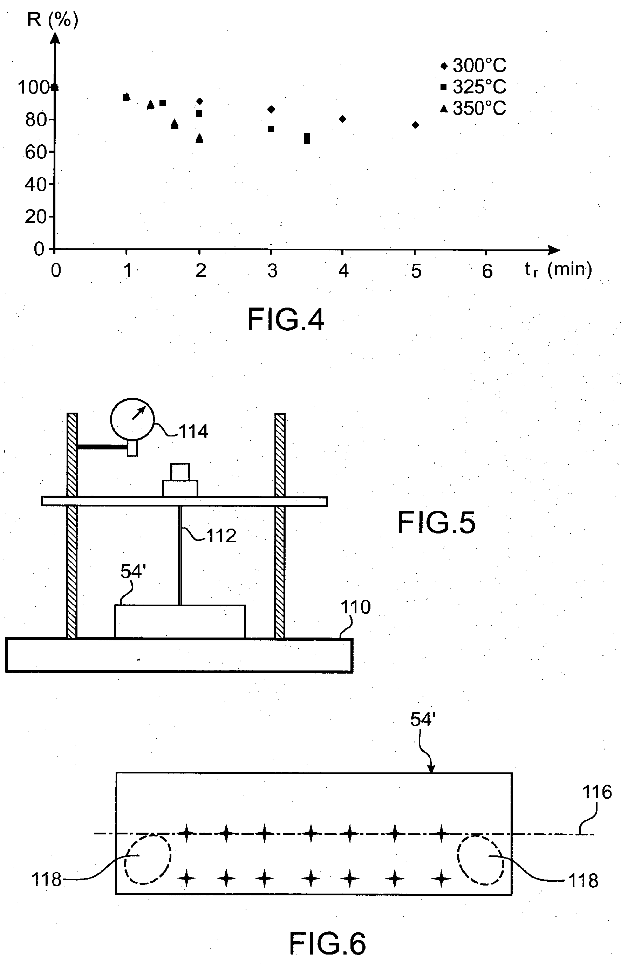

Les figures 3 et 4 illustrent des données préenregistrées dans le dispositif de commande 44, permettant de déterminer par extrapolation la durée de torréfaction $t_r$ en fonction de la température de torréfaction $T_g$ et du rendement massique final *R* souhaité (sur base sèche).

A titre d'information, ces données ont pu être obtenues expérimentalement au moyen de l'unité de torréfaction 10 décrite ci-dessus, en ajustant manuellement la température de torréfaction $T_g$ et la durée de torréfaction $t_r$ au cours de différents essais, et en mesurant à chaque fois le rendement massique *R* obtenu en fin de torréfaction.

La figure 3 se rapporte à des expérimentations faites avec des particules de diamètre moyen égal à 10 mm, tandis que la figure 4 se rapporte à des expérimentations faites avec des particules de diamètre moyen égal à 5 mm. Dans les deux cas, trois valeurs de température de torréfaction $T_g$ ont été testées, à savoir 300°C, 325°C et 350°C.

Ces expériences ont permis de valider la formule utilisée pour le calcul de la constante de réaction $k_t$, et donc du temps caractéristique de la réaction de torréfaction, à partir du modèle cinétique de Di Blasi et Branca comme expliqué ci-dessus. En effet, la différence entre le rendement théorique fourni par ce modèle et celui mesuré expérimentalement est en moyenne de 4% pour les particules de 5mm de diamètre, et de 8% en moyenne pour les particules de 10mm.

De plus, un second thermocouple a été utilisé lors de ces expériences. Ce thermocouple a été disposé à l'intérieur d'une particule de biomasse. Une comparaison entre la température au sein de la particule mesurée par ce thermocouple et la température du gaz inerte mesurée par le thermocouple 42 décrit ci-dessus a permis de déterminer expérimentalement le temps de réchauffement de la particule. Ces mesures ont permis de valider le calcul du temps caractéristique de transfert thermique expliqué ci-dessus puisque la différence entre ce temps caractéristique et celui mesuré expérimentalement représente en moyenne 10% du temps mesuré expérimentalement pour les particules de 5 mm et en moyenne 7% du temps mesuré expérimentalement pour les particules de 10 mm.

Les graphes des figures 3 et 4 montrent de plus que la torréfaction peut être conduite rapidement, en moins de 9 minutes pour les deux tailles de particules testées, avec une perte de masse inférieure à 30%.

Bien entendu, des données fondées sur un plus grand nombre d'expériences peuvent être enregistrées dans le dispositif de commande 44 de manière à accroître la précision du calcul de la durée de torréfaction $t_r$.

Au terme d'expériences du type décrit ci-dessus, l'homogénéité de la torréfaction au sein des particules de biomasse peut être vérifiée par des mesures et comparée aux résultats fournis par le calcul décrit ci-dessus.

La figure 5 illustre un dispositif d'analyse permettant de conduire de telles mesures.

Le principe de ce dispositif d'analyse repose sur la mesure de la profondeur de pénétration, dans les particules de Hêtre torréfiées, d'un poinçon soumis à une contrainte donnée.

Les particules de Hêtre torréfiées sont préalablement coupées de manière à permettre une mesure sur une surface plane, à coeur et en périphérie de l'échantillon.

Chaque échantillon 54' ainsi obtenu est maintenu stable sur une pièce de métal 110 par collage. Dans un premier temps, le poinçon 112 est amené à la surface de l'échantillon ; une pré-contrainte, mesurée par un capteur de force 114, est appliquée comme référence des analyses, puis une contrainte supérieure est appliquée et l'enfoncement du poinçon 112 qui en résulte est mesuré à l'aide du comparateur.

Cette mesure est répétée en divers points 115 sur un axe médian 116 de l'échantillon (figure 6), c'est-à-dire « à coeur », et en périphérie, à 2mm du bord, de manière à comparer l'effet du traitement thermique à la surface et au coeur de l'échantillon. Plusieurs mesures peuvent avantageusement être réalisées sur le même axe pour obtenir une valeur moyenne de l'enfoncement, et s'affranchir de l'hétérogénéité du matériau de l'échantillon. Ces mesures ne devraient pas être réalisées sur des zones d'extrémité 118 de l'échantillon à cause des effets de bord.

D'une manière générale, une application particulière des dispositifs et procédés de torréfaction selon l'invention à des particules de Hêtre a été décrite ci-dessus, mais il est bien entendu que l'invention peut être appliquée à tout type de particules de biomasse.

En particulier, l'invention peut être appliquée à tous les types de bois, à tous les feuillus, tels que le Hêtre, mais aussi aux résineux. Ces derniers ont en effet une réactivité moins importante que le Hêtre, et permettent donc d'obtenir plus facilement des valeurs élevées du rapport $H$ traduisant l'homogénéité de la réaction de torréfaction.

## Revendications

1. Procédé de commande d'une unité (10) de torréfaction pour la torréfaction de particules (54) de biomasse, préférentiellement lignocellulosique, pendant une durée de torréfaction $t_r$ dans un gaz porté à une température de torréfaction $T_g$, ledit procédé étant **caractérisé en ce qu'**il comprend les étapes successives de :

   - mesure d'un diamètre moyen $d_p$ des particules de biomasse ;
   - en fonction du diamètre moyen $d_p$ des particules de biomasse, calcul d'une température de torréfaction maximale $T_g^{max}$ pour laquelle un rapport $H$ d'un temps caractéristique de la réaction de torréfaction à un temps caractéristique du transfert thermique au niveau des particules de biomasse est égal à une valeur minimale $H^{min}$ prédéfinie ;
   - réglage de la température de torréfaction $T_g$ dudit fluide à une valeur inférieure ou égale à ladite température de torréfaction maximale $T_g^{max}$ ;
   - réglage de la durée de torréfaction $t_r$ à une valeur telle que le rendement massique final $R$ de la torréfaction soit égal à une valeur cible prédéfinie.

2. Procédé de commande selon la revendication 1, dans lequel la température de torréfaction $T_g$ est réglée égale à ladite température de torréfaction maximale $T_g^{max}$.

3. Procédé de commande selon la revendication 1 ou 2, dans lequel ladite valeur minimale $H^{min}$ prédéfinie dudit rapport $H$ est supérieure ou égale à 2, de préférence supérieure ou égale à 5, et encore préférentiellement supérieure ou égale à 10.

4. Procédé de commande selon l'une quelconque des revendications précédentes, dans lequel ladite valeur cible du rendement massique final $R$ de la torréfaction est supérieure ou égale à 60%, préférentiellement 70%, et plus préférentiellement 80%.

5. Procédé de commande selon l'une quelconque des revendications précédentes, dans lequel ladite température de torréfaction $T_g$ est comprise dans la plage 300°C - 400°C, préférentiellement dans la plage 300°C - 350°C, et plus préférentiellement dans la plage 325°C-350°C.

6. Procédé de commande selon l'une quelconque des revendications précédentes, dans lequel ladite durée de torréfaction $t_r$ est inférieure à 15 minutes, de préférence inférieure à 10 minutes, encore plus préférentiellement inférieure à 5 minutes.

7. Procédé de commande selon l'une quelconque des revendications 1 à 6, dans lequel ladite température de torréfaction maximale $T_g^{max}$ est déterminée en fonction de ladite valeur minimale $H^{min}$ dudit rapport par la formule :

$$H^{min} = \frac{1/k_t}{\frac{\rho_p Cp_p d_p^2}{36\lambda_{eff,p}}}$$

dans laquelle :

- $k_t$ est une constante de la réaction de torréfaction, considérée comme étant une réaction du premier ordre ;
- $\rho_p$ est la masse volumique de la biomasse;
- $Cp_p$ est la chaleur massique de la biomasse ;
- $\lambda_{eff,p}$ est la conductivité thermique effective de la biomasse.

8. Procédé de commande selon l'une quelconque des revendications 1 à 6, dans lequel ladite température de torréfaction maximale $T_g^{max}$ est déterminée en fonction de ladite valeur minimale $H^{min}$ dudit rapport par la formule :

$$H^{min} = \frac{1/k_t}{\frac{\rho_p Cp_p d_p^2}{36\lambda_{eff,p}} + \min(\frac{\rho_p Cp_p d_p}{6h_{conv}}; \frac{\rho_p Cp_p d_p}{6\omega_p\sigma(T_g^{max} + T_p)(T_g^{max^2} + T_p^2)})}$$

dans laquelle :

- $k_t$ est une constante de la réaction de torréfaction, considérée comme étant une réaction du premier ordre ;
- $\rho_g$ est la masse volumique de la biomasse ;
- $Cp_p$ est la chaleur massique de la biomasse ;
- $\lambda_{eff,p}$ est la conductivité thermique effective de la biomasse ;
- $\omega_p$ est l'émissivité de la biomasse ;
- $h_{conv}$ est le coefficient de transfert thermique externe entre la biomasse et ledit fluide ;
- $\sigma$ est la constante de Stefan-Boltzmann ;
- $Tp$ est la température initiale des particules de biomasse avant torréfaction.

9. Procédé de commande selon la revendication précédente, dans lequel ledit coefficient de transfert thermique externe $h_{conv}$ est déterminé à partir de la corrélation de Ranz-Marschall, par la formule :

$$h_{conv} = \frac{\lambda_g}{d_p}(2 + 0.6Re_p^{1/2}.Pr^{1/2})$$

dans laquelle :

- $Re_p$ est le nombre de Reynolds déterminé par la formule :

$$Re_p = \frac{\rho_g \times V_g \times d_p}{\mu_g};$$

- $Pr$ est le nombre de Prandtl déterminé par la formule :

$$Pr = \frac{\mu_g \times Cp_g}{\lambda_g} \ ;$$

où :

- $\rho_p$ est la masse volumique du fluide ;
- $\mu_g$ est la viscosité du fluide ;
- $\lambda_g$ est la conductivité thermique du fluide ;
- $Cp_g$ est la chaleur massique du fluide ;
- $V_g$ est une vitesse du fluide par rapport aux particules de biomasse.

**10.** Procédé de commande selon l'une quelconque des revendications précédentes, dans lequel la durée de torréfaction $t_r$ est déterminée en fonction de la température de torréfaction $T_g$ et de la valeur de cible du rendement massique final R de la torréfaction, au moyen de données expérimentales de corrélation préétablies.

**11.** Procédé de torréfaction de particules de biomasse (54), préférentiellement de biomasse lignocellulosique, pendant une durée de torréfaction $t_r$ dans un gaz porté à une température de torréfaction $T_g$ au sein d'une unité de torréfaction (10), **caractérisé en ce qu'**il comprend la commande de ladite unité de torréfaction (10) au moyen d'un procédé de commande selon l'une quelconque des revendications précédentes.

**12.** Procédé selon la revendication 11, dans lequel le diamètre moyen $d_p$ des particules de biomasse est inférieur à 40 mm, de préférence inférieur à 20 mm, encore plus préférentiellement inférieur à 10 mm.

**13.** Dispositif (44) de commande d'unité (10) de torréfaction pour la torréfaction de particules de biomasse pendant une durée de torréfaction $t_r$ dans un fluide porté à une température de torréfaction $T_g$, le dispositif de commande (44) étant **caractérisé en ce qu'**il comprend :

- des moyens (46) de mesure d'un diamètre moyen $dp$ de particules de biomasse (54) ;
- des moyens de calcul (48) configurés pour déterminer, en fonction du diamètre moyen $dp$ mesuré des particules de biomasse, une température de torréfaction maximale $T_g^{max}$ pour laquelle le rapport H d'un temps caractéristique de la réaction de torréfaction à un temps caractéristique du transfert thermique au niveau des particules de biomasse est égal à une valeur minimale $H^{min}$ prédéfinie ;
- des moyens de commande (50) configurés pour régler ladite température de torréfaction $T_g$ à une valeur inférieure ou égale à ladite température de torréfaction maximale $T_g^{max}$ ;
- des moyens de calcul et de commande (48, 50) configurés pour régler ladite durée de torréfaction $t_r$ à une valeur telle que le rendement massique final R de la torréfaction soit égal à une valeur prédéfinie.

**14.** Dispositif de commande selon la revendication 13, comprenant en outre des moyens (52) de préréglage de ladite valeur minimale $H^{min}$ dudit rapport H et/ou des moyens de préréglage du rendement massique final R de la torréfaction.

**15.** Unité (10) de torréfaction pour la torréfaction de particules de biomasse (54) pendant une durée de torréfaction $t_r$ dans un gaz porté à une température de torréfaction $T_g$, **caractérisée en ce qu'**elle comprend un dispositif de commande (44) selon la revendication 13 ou 14, ainsi que des moyens de chauffage (14) pour porter ledit gaz à la température de torréfaction $T_g$ fixée par ledit dispositif (44), pendant un temps égal à la durée de torréfaction $t_r$ fixée par ce dispositif (44).

**Patentansprüche**

**1.** Verfahren zur Steuerung einer Torrefizierungseinheit (10) zur Torrefizierung von Partikeln (54) aus Biomasse, vorzugsweise aus Lignozellulose, während einer Torrefizierungszeitdauer $t_r$ in einem Gas, das auf eine Torrefizierungstemperatur $T_g$ erhitzt wurde, wobei das Verfahren **dadurch gekennzeichnet ist, dass** es folgende aufeinanderfolgende Schritte umfasst:

Messen eines mittleren Durchmessers $d_p$ der Biomasse-Partikel;
in Abhängigkeit vom mittleren Durchmesser $d_p$ der Biomasse-Partikel, Berechnen einer maximalen Torrefizierungstemperatur $T_g^{\max}$, für die ein Quotient $H$ einer charakteristischen Torrefizierungsreaktionszeit zu einer charakteristischen Wärmeübertragungszeit hinsichtlich der Biomasse-Partikel einem vordefinierten minimalen Wert $H^{\min}$ entspricht;
Regeln der Torrefizierungstemperatur $T_g$ des Fluids auf einen Wert unterhalb oder gleich groß der maximalen Torrefizierungstemperatur $T_g^{\max}$;
Regeln der Torrefizierungszeitdauer $t_r$ auf einen solchen Wert, dass der Massen-Endertrag R der Torrefizierung einem vordefiniertem Zielwert entspricht.

2. Verfahren zur Steuerung nach Anspruch 1, bei dem die Torrefizierungstemperatur $T_g$ auf einen Wert geregelt wird, welcher der maximalen Torrefizierungstemperatur $T_g^{\max}$ entspricht.

3. Verfahren zur Steuerung nach Anspruch 1 oder 2, bei dem der vordefinierte minimale Wert $H^{\min}$ des Quotienten H größer oder gleich 2 ist, vorzugsweise größer oder gleich 5, und noch stärker bevorzugt größer oder gleich 10 ist.

4. Verfahren zur Steuerung nach einem der vorhergehenden Ansprüche, bei dem der Zielwert des Massen-Endertrags R der Torrefizierung größer oder gleich 60 % ist, vorzugsweise 70 %, und stärker bevorzugt 80 %.

5. Verfahren zur Steuerung nach einem der vorhergehenden Ansprüche, bei dem die Torrefizierungstemperatur $T_g$ im Bereich von 300 °C - 400 °C, vorzugsweise im Bereich von 300 °C - 350 °C, und noch stärker bevorzugt im Bereich von 325 °C - 350 °C liegt.

6. Verfahren zur Steuerung nach einem der vorhergehenden Ansprüche, bei dem die Torrefizierungszeitdauer $t_r$ unterhalb 15 Minuten, vorzugsweise unterhalb 10 Minuten, und noch stärker bevorzugt unterhalb 5 Minuten liegt.

7. Verfahren zur Steuerung nach einem der Ansprüche 1 bis 6, bei dem die maximale Torrefizierungstemperatur $T_g^{\max}$ in Abhängigkeit von dem minimalen Wert $H^{\min}$ des durch folgende Formel bestimmten Quotienten bestimmt wird:

$$H^{min} = \frac{1/k_t}{\dfrac{\rho_p Cp_p d_p^2}{36\lambda_{eff,p}}}$$

wobei:

- $k_t$ eine Konstante der Torrefizierungsreaktion ist, die als eine Reaktion erster Ordnung betrachtet wird;
- $\rho_p$ die Dichte der Biomasse ist;
- $Cp_p$ die spezifische Wärmekapazität der Biomasse ist;
- $\lambda_{eff,p}$ die effektive Wärmeleitfähigkeit der Biomasse ist.

8. Verfahren zur Steuerung nach einem der Ansprüche 1 bis 6, bei dem die maximale Torrefizierungstemperatur $T_g^{\max}$ in Abhängigkeit von dem minimalen Wert $H^{\min}$ des durch folgende Formel bestimmten Quotienten bestimmt wird:

$$H^{min} = \frac{1/k_t}{\dfrac{\rho_p Cp_p d_p^2}{36\lambda_{eff,p}} + \min\left(\dfrac{\rho_p Cp_p d_p}{6h_{conv}} ; \dfrac{\rho_p Cp_p d_p}{6\omega_p \sigma \left(T_g^{max} + T_p\right)\left(T_g^{max2} + T_p^{\,2}\right)}\right)}$$

wobei:

- $k_t$ eine Konstante der Torrefizierungsreaktion ist, die als eine Reaktion erster Ordnung betrachtet wird;
- $\rho_p$ die Dichte der Biomasse ist;
- $Cp_p$ die spezifische Wärmekapazität der Biomasse ist;
- $\lambda_{eff,p}$ die effektive Wärmeleitfähigkeit der Biomasse ist.
- $\omega_p$ das Emissionsvermögen der Biomasse ist;
- $h_{conv}$ der Koeffizient der externen Wärmeübertragung zwischen der Biomasse und dem Fluid ist;
- $\sigma$ die Stefan-Bolzmann-Konstante ist;
- $T_p$ die Anfangstemperatur der Biomasse-Partikel vor der Torrefizierung ist.

9. Verfahren zur Steuerung nach dem vorhergehenden Anspruch, bei dem der Koeffizient zur externen Wärmeübertragung $h_{conv}$ ausgehend von der Ranz-Marschall-Korrelation bestimmt wird, und zwar durch folgende Formel:

$$h_{conv} = \frac{\lambda_g}{d_p}(2 + 0.6 Re_p^{1/2}.Pr^{1/2})$$

wobei:

- $Re_p$ die Reynolds-Zahl ist, die durch folgende Formel bestimmt wird:

$$Re_p = \frac{\rho_g \times V_g \times d_p}{\mu_g};$$

- Pr die Prandtl-Zahl ist, die durch folgende Formel bestimmt wird:

$$Pr = \frac{\mu_g \times Cp_g}{\lambda_g};$$

wobei:

- $\rho_p$ die Dichte des Fluids ist
- $\mu_g$ die Viskosität des Fluids ist;
- $\lambda_g$ die Wärmeleitfähigkeit des Fluids ist;
- $Cp_g$ die spezifische Wärmekapazität des Fluids ist;
- $V_g$ eine Geschwindigkeit des Fluids bezüglich der Biomasse-Partikel ist.

10. Verfahren zur Steuerung nach einem der vorhergehenden Ansprüche, bei dem die Torrefizierungszeitdauer $t_r$ in Abhängigkeit von der Torrefizierungstemperatur $T_g$ und dem Zielwert des Massen-Endertrags R der Torrefizierung bestimmt wird, und zwar mittels zuvor bestimmten empirischen Korrelationsdaten.

11. Verfahren zur Torrefizierung von Partikeln aus Biomasse (54), vorzugsweise von Biomasse aus Lignozellulose während einer Torrefizierungszeitdauer $t_r$ in einem Gas, das auf eine Torrefizierungstemperatur $T_g$ erhitzt wurde, und zwar im Inneren einer Torrefizierungseinheit (10), **dadurch gekennzeichnet, dass** es die Steuerung der Torrefizierungseinheit (10) mittels eines Steuerungsverfahrens nach einem der vorhergehenden Ansprüche umfasst.

12. Verfahren nach Anspruch 11, bei dem der mittlere Durchmesser $d_p$ der Biomasse-Partikel unterhalb 40 mm, vorzugsweise unterhalb 20 mm, und noch stärker bevorzugt unterhalb 10 mm liegt.

13. Vorrichtung (44) zur Steuerung einer Torrefizierungseinheit (10) zur Torrefizierung von Partikeln aus Biomasse während einer Torrefizierungszeitdauer $t_r$ in einem Gas, das auf eine Torrefizierungstemperatur $T_g$ erhitzt wurde, wobei die Steuerungsvorrichtung (44) **dadurch gekennzeichnet ist, dass** sie aufweist:

Einrichtungen (46) zum Messen eines mittleren Durchmessers $d_p$ von Biomasse-Partikeln (54);

Berechnungseinrichtungen (48), die konfiguriert sind, um in Abhängigkeit vom gemessenen mittleren Durch-

messer $d_p$ der Biomasse-Partikel eine maximale Torrefizierungstemperatur $T_g^{\max}$ zu bestimmen, für die ein Quotient $H$ einer charakteristischen Torrefizierungsreaktionszeit zu einer charakteristischen Wärmeübertragungszeit hinsichtlich der Biomasse-Partikel einem vordefinierten minimalen Wert $H^{\min}$ entspricht; Steuerungseinrichtungen (50), die konfiguriert sind, um die Torrefizierungstemperatur $T_g$ des Fluids auf einen Wert unterhalb oder gleich groß der maximalen Torrefizierungstemperatur $T_g^{\max}$ zu regeln;

Berechnungs- und Steuerungseinrichtungen (48, 50), die konfiguriert sind, um die Torrefizierungszeitdauer $t_r$ auf einen solchen Wert zu regeln, dass der Massen-Endertrag R der Torrefizierung einem vordefiniertem Wert entspricht.

**14.** Vorrichtung zur Steuerung nach Anspruch 13, weiter aufweisend:

Einrichtungen (52) zum Voreinstellen des minimalen Wertes $H^{\min}$ des Quotienten H und/oder Einrichtungen zum Voreinstellen des Massen-Endertrags R der Torrefizierung.

**15.** Torrefizierungseinheit (10) für die Torrefizierung von Partikeln aus Biomasse (54) während einer Torrefizierungszeitdauer $t_r$ in einem Gas, das auf eine Torrefizierungstemperatur $T_g$ erwärmt wurde, **dadurch gekennzeichnet, dass** sie eine Steuerungsvorrichtung (44) nach Anspruch 13 oder 14, sowie auch Aufheizeinrichtungen (14) aufweist, um das Gas auf die Torrefizierungstemperatur zu bringen, die durch die Vorrichtung (44) festgelegt wurde, und zwar während einer Zeitdauer, die gleich groß wie die durch diese Vorrichtung (44) festgelegte Torrefizierungszeitdauer $t_r$ ist.

## Claims

**1.** Process for controlling a torrefaction unit (10) for torrefaction of biomass particles (54), preferably lignocellulosic particles, for a torrefaction time $t_r$ in a gas heated to a torrefaction temperature $T_g$, said process being **characterised in that** it comprises successive steps for:

- measuring a mean diameter $dp$ of the biomass particles;
- according to the mean diameter $dp$ of the biomass particles, computing a maximum torrefaction temperature $T_g^{max}$ for which a *ratio H* of a characteristic torrefaction reaction time to a characteristic heat transfer time in the biomass particles is equal to a predefined minimum value $H^{min}$;
- setting the torrefaction temperature $T_g$ of said fluid to a value less than or equal to said maximum torrefaction temperature $T_g^{max}$;
- setting the torrefaction time $t_r$ to a value such that the final mass yield $R$ of the torrefaction is equal to a predefined target value.

**2.** Control process according to claim 1, wherein the torrefaction temperature $T_g$ is set equal to said maximum torrefaction temperature $T_g^{max}$ .

**3.** Control process according to claim 1 or 2, wherein said predefined minimum value $H^{min}$ of said ratio $H$ is greater than or equal to 2, preferably greater than or equal to 5, and more preferentially greater than or equal to 10.

**4.** Control process according to any of the above claims, wherein said target value of the final mass yield $R$ of the torrefaction is greater than or equal to 60%, preferentially 70%, and more preferentially 80%.

**5.** Control process according to any of the above claims, wherein said torrefaction temperature $T_g$ is within the range 300°C - 400°C, preferentially in the range 300°C - 350°C, and more preferentially in the range 325°C - 350°C.

**6.** Control process according to any of the above claims, wherein said torrefaction time $t_r$ is less than 15 minutes, preferably less than 10 minutes, more preferentially less than 5 minutes.

**7.** Control process according to any of claims 1 to 6, wherein said maximum torrefaction temperature $T_g^{max}$ is determined according to said minimum value $H^{min}$ of said ratio using the formula:

$$H^{min} = \frac{1/k_t}{\frac{\rho_p Cp_p d_p^2}{36\lambda_{eff,p}}}$$

wherein:

- $k_t$ is a reaction rate constant for the torrefaction reaction, considered to be a first-order reaction;
- $\rho_p$ is the volumetric mass density of the biomass;
- $Cp_p$ is the specific heat of the biomass;
- $\lambda_{eff,p}$ is the effective thermal conductivity of the biomass.

8. Control process according to any of claims 1 to 6, wherein said maximum torrefaction temperature $T_g^{max}$ is determined according to said minimum value $H^{min}$ of said ratio using the formula:

$$H^{min} = \frac{1/k_t}{\frac{\rho_p Cp_p d_p^2}{36\lambda_{eff,p}} + \min\left(\frac{\rho_p Cp_p d_p}{6h_{conv}}; \frac{\rho_p Cp_p d_p}{6\omega_p \sigma\left(T_g^{max} + T_p\right)\left(T_g^{max2} + T_p^2\right)}\right)}$$

wherein:

- $k_t$ is a reaction rate constant for the torrefaction reaction, considered to be a first-order reaction;
- $\rho_g$ is the volumetric mass density of the biomass;
- $Cp_p$ is the specific heat of the biomass;
- $\lambda_{eff,p}$ is the effective heat conductivity of the biomass;
- $\omega_p$ is the emissivity of the biomass;
- $h_{conv}$ is the external heat transfer coefficient between the biomass and said fluid;
- $\sigma$ is the Stefan-Boltzmann constant;
- $T_p$ is the initial temperature of the biomass particles before torrefaction.

9. Control process according to the preceding claim, wherein said external heat transfer coefficient $h_{conv}$ is determined using the Ranz-Marshall correlation, by means of the formula:

$$h_{conv} = \frac{\lambda_g}{d_p}\left(2 + 0.6 Re_p^{1/2} . Pr^{1/2}\right)$$

wherein:

- $Re_p$ is the Reynolds number determined using the formula:

$$Re_p = \frac{\rho_g \times V_g \times d_p}{\mu_g};$$

- $Pr$ is the Prandtl number determined using the formula:

$$Pr = \frac{\mu_g \times Cp_g}{\lambda_g};$$

where:

- $\rho_g$ is the volumetric mass density of the fluid;
- $\mu_g$ is the viscosity of the fluid;
- $\lambda_g$ is the thermal conductivity of the fluid;
- $Cp_g$ is the specific heat of the fluid;
- $V_g$ is a velocity of the fluid relative to the biomass particles.

**10.** Control process according to any of the above claims, wherein the torrefaction time $t_r$ is determined according to the torrefaction temperature $T_g$ and the target value of the final mass yield $R$ of the torrefaction, by means of predetermined experimental correlation data.

**11.** Process for torrefaction of biomass particles (54), preferably lignocellulosic particles, for a torrefaction time $t_r$ in a gas heated to a torrefaction temperature $T_g$ in a torrefaction unit (10), **characterised in that** it comprises control of said torrefaction unit (10) by means of a control process according to any of the above claims.

**12.** Process according to claim 11, wherein the mean diameter $dp$ of the biomass particles is less than 40 mm, preferably less than 20 mm, more preferentially less than 10 mm.

**13.** Device (44) for controlling a torrefaction unit (10) for the torrefaction of biomass particles for a torrefaction time $t_r$ in a fluid heated to a torrefaction temperature $T_g$, the control device (44) being **characterised in that** it comprises:

- means (46) for measuring a mean diameter $dp$ of the biomass particles (54);
- computing means (48) designed to determine, according to the previously measured mean diameter $dp$ of the biomass particles, a maximum torrefaction temperature $T_g^{max}$ for which the ratio $H$ of a characteristic torrefaction reaction time to a characteristic heat transfer time in the biomass particles is equal to a predefined minimum value $H^{min}$;
- control means (50) designed to set said torrefaction temperature $T_g$ to a value less than or equal to said maximum torrefaction temperature $T_g^{max}$;
- computing and control means (48, 50) designed to set said torrefaction time $t_r$ to a value such that the final mass yield $R$ of the torrefaction is equal to a predefined value.

**14.** Control device according to claim 13, further comprising means (52) for pre-setting said minimum value $H^{min}$ of said ratio $H$ and/or means for pre-setting the final mass yield $R$ of the torrefaction.

**15.** Torrefaction unit (10) for the torrefaction of biomass particles (54) for a torrefaction time $t_r$ in a gas heated to a torrefaction temperature $T_g$, **characterised in that** it comprises a control device (44) according to claim 13 or 14, along with heating means (14) for heating said gas to the torrefaction temperature $T_g$ set by said device (44), for a time equal to the torrefaction time $t_r$ set by this device (44).

FIG.1

FIG.1a

FIG.2

FIG.3

FIG.4

FIG.5

FIG.6

**EP 2 794 821 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DI BLASI, C. ; C. BRANCA.** Kinetics of Primary Product Formation from Wood Pyrolysis. *Industrial & Engineering Chemistry Research,* 2001, vol. 40 (23), 5547-5556